(19) Europäisches Patentamt
European Patent Office
Office européen des brevets

(11) EP 2 832 749 B1

# (12) EUROPEAN PATENT SPECIFICATION

(45) Date of publication and mention of the grant of the patent:
**13.07.2016 Bulletin 2016/28**

(21) Application number: **13768809.9**

(22) Date of filing: **28.03.2013**

(51) Int Cl.:
***C08B 3/12*** *(2006.01)*
***C08J 3/22*** *(2006.01)*
***C08J 7/14*** *(2006.01)*
***C08L 1/10*** *(2006.01)*
***C08L 101/00*** *(2006.01)*

(86) International application number:
**PCT/JP2013/059342**

(87) International publication number:
**WO 2013/147063 (03.10.2013 Gazette 2013/40)**

## (54) METHOD FOR PRODUCING MODIFIED CELLULOSE NANOFIBERS, MODIFIED CELLULOSE NANOFIBERS, RESIN COMPOSITION, AND MOLDED BODY THEREOF

VERFAHREN ZUR HERSTELLUNG VON MODIFIZIERTEN CELLULOSENANOFASERN, MODIFIZIERTE CELLULOSENANOFASERN, HARZZUSAMMENSETZUNG UND FORMKÖRPER DARAUS

NANO-FIBRES DE CELLULOSE MODIFIÉE AINSI QUE PROCÉDÉ DE FABRICATION DE CELLES-CI, ET COMPOSITION DE RÉSINE AINSI QU'ARTICLE MOULÉ DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2012 JP 2012076533**

(43) Date of publication of application:
**04.02.2015 Bulletin 2015/06**

(73) Proprietor: **DIC Corporation**
**Tokyo 174-8520 (JP)**

(72) Inventors:
- **IKUMA Takahito**
  **Sakura-shi**
  **Chiba 285-8668 (JP)**
- **YAMAZAKI Takeshi**
  **Sakura-shi**
  **Chiba 285-8668 (JP)**
- **HARADA Tomoaki**
  **Sakura-shi**
  **Chiba 285-8668 (JP)**
- **HARADA Tetsuya**
  **Sakura-shi**
  **Chiba 285-8668 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2005/003450**
**WO-A1-2012/043558**
**WO-A1-2012/089929**
**JP-A- 2009 261 993**
**JP-A- 2009 293 167**
**JP-A- 2011 105 799**
**JP-A- 2012 229 350**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a method for producing modified cellulose nanofibers, the method including the steps of fibrillating cellulose in a fibrillation resin to produce cellulose nanofibers and reacting hydroxyl groups of the cellulose nanofibers with a cyclic polybasic acid anhydride (A) in the fibrillation resin to produce modified cellulose nanofibers, modified cellulose nanofibers produced by the above-described production method, a resin composition including the above-described modified cellulose nanofibers, and a molded body formed of the above-described resin composition.

### Background Art

Cellulose nanofibers are a recently developed plant-derived natural nanofiller that has attracted attention as a low-specific-gravity, high-strength composite material used for resins.

In order to produce cellulose nanofibers by fibrillating cellulose having multiple hydroxyl groups at a nano-level, the following methods may be employed: performing fibrillation in water; mixing a large amount of water with a resin and then performing fibrillation (see PTL 1); or fibrillating cellulose in an organic solvent (see PTL 2). However, since fibrillated cellulose nanofibers are quite bulky due to the size of the nanosized fibers and have high hydrophilicity, even a small amount of fibrillated cellulose nanofibers added to a resin disadvantageously increases the viscosity of the resulting resin composition. Therefore, the maximum amount of fibrillated cellulose nanofibers that can be added to a resin is quite small and insufficient to improve the mechanical properties of the resin.

On the other hand, there has been proposed a method in which the dispersal state of cellulose nanofibers in a composition is improved by providing modified cellulose nanofibers produced by reacting cellulose nanofibers with an acid anhydride to induce half esterification of the cellulose nanofibers (see PTLs 3 and 4). However, in all of the above-described methods, fibrillation of cellulose is performed in water, which requires steps of dehydration, drying, solvent substitution, and the like. In addition, the modified cellulose nanofibers have high hydrophilicity. Thus, the issue remains that even a small amount of fibrillated cellulose nanofibers added to a resin disadvantageously increases the viscosity of the resulting resin composition.

### Citation List

#### Patent Literature

PTL 1 : Japanese Unexamined Patent Application Publication No. 2005-42283
PTL 2: Japanese Unexamined Patent Application Publication No. 2009-261993
PTL 3: Japanese Unexamined Patent Application Publication No. 2009-293167
PTL 4: Japanese Unexamined Patent Application Publication No. 2011-105799

### Summary of Invention

#### Technical Problem

An object of the present invention is to provide a method for producing modified cellulose nanofibers that enhance the mechanical properties of a resin composition including the modified cellulose nanofibers and the mechanical properties of a molded body formed of the resin composition and that are readily mixed with a resin. Another object of the present invention is to provide modified cellulose nanofibers produced by the above-described production method, a resin composition including the above-described modified cellulose nanofibers, and a molded body formed of the above-described resin composition. Solution to Problem

The inventors of the present invention have conducted extensive studies and, as a result, have found that the above-described issues may be addressed by providing the following: a method for producing modified cellulose nanofibers including the steps of fibrillating cellulose in a fibrillation resin without using water nor a hydrophilic solvent in order to produce cellulose nanofibers and reacting hydroxyl groups of the cellulose nanofibers with a cyclic polybasic acid anhydride (A) in the fibrillation resin in order to produce modified cellulose nanofibers; modified cellulose nanofibers produced by the above-described production method; a resin composition including the modified cellulose nanofibers; and a molded body formed of the resin composition.

Specifically, the present invention provides a method for producing modified cellulose nanofibers including the steps of fibrillating cellulose in a fibrillation resin in order to produce cellulose nanofibers and reacting hydroxyl groups of the cellulose nanofibers with a cyclic polybasic acid anhydride (B) in the fibrillation resin in order to produce modified cellulose nanofibers.

The present invention also provides a method for producing modified cellulose nanofibers based on the production method described in Claim 1, in which the cyclic polybasic acid anhydride (B) is represented by Structural Formula (1) below.

[Chem. 1]

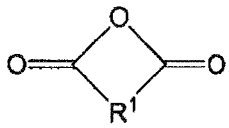

... (1)

(In Structural Formula (1), $R^1$ represents a straight-chain or branched-chain alkylene group having a carbon number of 15 or less, a straight-chain or branched-chain alkenylene group having a carbon number of 15 or less, or a substituent having a cyclic structure. Optionally, the cyclic acid anhydride may be bonded to another cyclic acid anhydride via the substituent to form a multimer)

The present invention further provides modified cellulose nanofibers produced by the above-described production method, a resin composition including the above-described modified cellulose nanofibers, and a molded body formed of the above-described resin composition. Advantageous Effects of Invention

According to the present invention, there are provided a method for producing modified cellulose nanofibers including the steps of fibrillating cellulose in a fibrillation resin in order to produce cellulose nanofibers and reacting hydroxyl groups of the cellulose nanofibers with a cyclic polybasic acid anhydride (B) in the fibrillation resin in order to produce modified cellulose nanofibers and modified cellulose nanofibers produced by the above-described production method. The above-described modified cellulose nanofibers may be added to a resin composition at a high concentration. In addition, a molded body formed of the resin composition has good mechanical properties such as fracture toughness.

Description of Embodiments

Embodiments of the present invention are described below in detail. The following description is merely exemplary embodiments of the present invention and does not limit the present invention.

[Types of Cellulose]

The cellulose nanofibers used in the present invention may be produced by fibrillating cellulose and, when added to a resin, enhance the fracture toughness and the like of the resin, that is, serve as reinforcements for resins. Cellulose used in the present invention may be any cellulose as long as it is a material capable of being fibrillated. Examples of such cellulose include pulp; cotton; paper; regenerated cellulose fibers such as rayon, cuprammonium rayon, polynosic, and acetate; bacterial cellulose; and animal-derived cellulose such as cellulose produced by sea squirts. The surfaces of these cellulose may be chemically modified as needed.

Both wood pulp and non-wood pulp may be suitably used as pulp. There are two types of wood pulp: mechanical pulp and chemical pulp. Chemical pulp is preferably used since it has a low lignin content. Examples of chemical pulp include a sulfite pulp, a craft pulp, and an alkali pulp, and all of these pulps may be suitably used as chemical pulp. Examples of non-wood pulp that can be used include straw, bagasse, kenaf, bamboo, reed, paper mulberry, and flax.

Cotton is a plant that is mainly used for producing clothing fiber, and raw cotton, cotton fiber, and cotton cloth may be used.

Paper is made from pulp from which fibers are removed. Waste papers such as newspapers, used milk cartons, and used copy papers may also be suitably used.

A cellulose powder having a specific particle size distribution which is produced by crushing cellulose may also be used as cellulose that serves as a material to be fibrillated. Examples of such a cellulose powder include KC Flock produced by Nippon Paper Industries Co., Ltd. Chemical Division, CEOLUS produced by Asahi Kasei Chemicals Corporation, and Avicel produced by FMC Corporation.

[Cellulose Nanofibers]

The cellulose nanofibers used in the present invention may be produced by fibrillating cellulose in a fibrillation resin. Specifically, cellulose is added to a fibrillation resin and subjected to a mechanically generated shearing force. The shearing force may be generated using a publicly known kneader or the like, such as a bead mill, an ultrasonic homogenizer, an extruder such as a single-screw extruder or a twin-screw extruder, a Banbury mixer, a grinder, a pressure kneader, or a two-roll kneader. Among these machines, a pressure kneader is preferably used because it allows a consistent shearing force to be generated even in a high-viscosity resin.

Cellulose is fibrillated into cellulose nanofibers by the fibrillation method according to the present invention. The size of the cellulose nanofibers produced by the fibrillation method according to the present invention may be, for example, 100 to 1000000 nm in the long-axis direction and 5 to 1000 nm in the short-axis direction.

[Fibrillation Resin]

Any publicly known resin may be used as the fibrillation resin used in the present invention as long as it does not impair the advantages of the present invention. Specific examples of the publicly known resin include a polyester resin, a vinyl resin, and a modified epoxy resin.

[Polyester Resin]

The polyester resin used in the present invention is a polyester resin produced by reacting one or more polyols represented by Structural Formula (2) below with one or more polycarboxylic acids represented by Structural Formula (3).

$$A\text{-}(OH)m \ldots \qquad (2)$$

[In Structural Formula (2), A represents an aliphatic hydrocarbon group having a carbon number of 1 to 20 which may optionally include an oxygen atom, an aromatic group that may optionally include a substituent, or a heterocyclic aromatic group that may optionally include a substituent; and m is an integer of 2 to 4]

$$B\text{-}(COOH)n \ldots \qquad (3)$$

[In Structural Formula (3), B represents an aliphatic hydrocarbon group having a carbon number of 1 to 20, an aromatic group that may optionally include a substituent, or a heterocyclic aromatic group that may optionally include a substituent; and n is an integer of 2 to 4]

Examples of the polyol represented by Structural Formula (2) include ethylene glycol, propylene glycol, 1,3-butanediol, 1,4-butanediol, pentyl glycol, neopentyl glycol, 1,5-pentanediol, 1,6-hexanediol, 1,7-heptanediol, 1,8-octanediol, 1,9-nonanediol, 1,10-decanediol, 1,11-undecanediol, 1,12-dodecanediol, diethylene glycol, triethylene glycol, tetraethylene glycol, polyethylene glycol, dipropylene glycol, polypropylene glycol, 2-methyl-1,3-propanediol, 2-butyl-2-ethyl-1,3-propanediol, 2-methyl-1,4-butanediol, 2-ethyl-1,4-butanediol, 2-methyl-1,3-propanediol, 3-methyl-1,5-pentanediol, 3-methyl-1,5-heptanediol, hydrogenated bisphenol A, bisphenol A-propylene oxide adduct, bisphenol A-ethylene oxide adduct, 1,2,3,4-tetrahydroxybutane, glycerin, trimethylolpropane, 1,3-propanediol, 1,2-cyclohexane glycol, 1,3-cyclohexane glycol, 1,4-cyclohexane glycol, 1,4-cyclohexanedimethanol, p-xylene glycol, bicyclohexyl-4,4'-diol, 2,6-decalin glycol, 2,7-decalin glycol, ethylene glycol carbonate, glycerin, trimethylolpropane, and pentaerythritol.

Examples of the polycarboxylic acid represented by Structural Formula (3) which is an unsaturated dibasic acid or an unsaturated dibasic acid anhydride include maleic acid, maleic anhydride, fumaric acid, itaconic acid, citraconic acid, chloromaleic acid, and esters of the above-described compounds. Specific examples thereof include a halogenated maleic anhydride, $\alpha,\beta$-unsaturated dibasic acids such as aconitic acid, and $\beta,\gamma$-unsaturated dibasic acids such as dihydromuconic acid. Examples of the polycarboxylic acid represented by Structural Formula (3) which is a saturated dibasic acid or a saturated dibasic acid anhydride include phthalic acid, phthalic anhydride, a halogenated phthalic anhydride, isophthalic acid, terephthalic acid, nitrophthalic acid, tetrahydrophthalic acid, tetrahydrophthalic anhydride, endo-methylenetetrahydrophthalic anhydride, a halogenated phthalic anhydride, and esters of the above-described compounds. Specific examples thereof include hexahydrophthalic acid, hexahydrophthalic anhydride, hexahydroterephthalic acid, hexahydroisophthalic acid, 1,4-cyclohexanedicarboxylic acid, 1,3-cyclohexanedicarboxylic acid, methylhexahydrophthalic acid, HET acid, 1,1-cyclobutanedicarboxylic acid, oxalic acid, succinic acid, succinic anhydride, malonic acid, glutaric acid, adipic acid, azelaic acid, pimelic acid, suberic acid, azelaic acid, sebacic acid 1,12-dodecanedioic acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid, and dialkyl esters of the above-described compounds.

A monohydric alcohol, a monovalent carboxylic acid, and a hydroxycarboxylic acid may optionally be used

together with the above-described polyols and polycarboxylic acids as long as they do not substantially impair the characteristics thereof.

Examples of the monohydric alcohol include methanol, ethanol, propanol, isopropanol, butanol, isobutanol, 2-butanol, 3-butanol, n-amyl alcohol, n-hexanol, isohexanol, n-heptanol, isoheptanol, n-octanol, 2-ethylhexanol, isooctanol, n-nonanol, isononanol, n-decanol, isodecanol, isoundecanol, lauryl alcohol, cetyl alcohol, decyl alcohol, undecyl alcohol, tridecyl alcohol, benzyl alcohol, and stearyl alcohol. These monohydric alcohols may be used alone or in combination of two or more.

Examples of the monovalent carboxylic acid include benzoic acid, heptanoic acid, nonanoic acid, caprylic acid, nonanoic acid, capric acid, undecylic acid, and lauric acid. These monovalent carboxylic acids may be used alone or in combination of two or more.

Examples of the hydroxycarboxylic acid include lactic acid, glycolic acid, 2-hydroxy-n-butyric acid, 2-hydroxycaproic acid, 2-hydroxy-3,3-dimethylbutyric acid, 2-hydroxy-3-methylbutyric acid, 2-hydroxyisocaproic acid, and p-hydroxybenzoic acid. These hydroxycarboxylic acids may be used alone or in combination of two or more.

Modified polyester resins produced by modifying the above-described polyester resins may also be used as the polyester resin used in the present invention. Examples of the modified polyester resins include urethane-modified polyester, acrylic-modified polyester, epoxy-modified polyester, and silicone-modified polyester.

The polyester resin used in the present invention may be straight-chain polyester or branched polyester.

The ester group concentration in the polyester resin used in the present invention is preferably 6.0 mmol/g or more, is more preferably 6.0 to 14 mmol/g, is further preferably 6.0 to 20 mmol/g, and is particularly preferably 6.0 to 30 mmol/g.

It is preferable that the ester group concentration in the polyester resin used in the present invention is 6.0 mmol/g or more and the acid value of the polyester resin is 10 KOHmg/g or more.

The acid value of the polyester resin is more preferably 10 to 100 KOHmg/g, is further preferably 10 to 200 KOHmg/g, and is particularly preferably 10 to 300 KOHmg/g.

It is preferable that the ester group concentration in the polyester resin used in the present invention is 6.0 mmol/g or more and the hydroxyl group value of the polyester resin is 10 or more.

The hydroxyl group value of the polyester resin is more preferably 10 to 500 KOHmg/g, is further preferably 10 to 800 KOHmg/g, and is particularly preferably 10 to 1000 KOHmg/g.

It is particularly preferable that the ester group concentration in the polyester resin used in the present invention is 6.0 mmol/g or more, the acid value of the polyester resin is 10 KOHmg/g or more, and the hydroxyl group value of the polyester resin is 10 KOHmg/g or more.

In the present invention, a single polyester resin may be used or a plurality of polyester resins may be used in combination.

[Vinyl Resin]

The vinyl resin used in the present invention is a polymer or a copolymer of vinyl monomers. Examples of the vinyl monomers that can be suitably used include, but are not particularly limited to, a (meth)acrylate ester derivative, a vinyl ester derivative, a maleic acid diester derivative, a (meth)acrylamide derivative, a styrene derivative, a vinyl ether derivative, a vinyl ketone derivative, an olefin derivative, a maleimide derivative, and (meth)acrylonitrile. A (meth)acryl resin produced by polymerization of a (meth)acrylate ester derivative is particularly preferably used as the vinyl resin in the present invention.

Examples of the above-described vinyl monomers that are preferably used are described below. Examples of the (meth)acrylate ester derivative include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, amyl (meth)acrylate, n-hexyl (meth)acrylate, cyclohexyl (meth)acrylate, t-butylcyclohexyl (meth)acrylate, 2-ethylhexyl (meth)acrylate, t-octyl (meth)acrylate, dodecyl (meth)acrylate, octadecyl (meth)acrylate, acetoxyethyl (meth)acrylate, phenyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 2-methoxyethyl (meth)acrylate, 2-ethoxyethyl (meth)acrylate, 2-(2-methoxyethoxy)ethyl (meth)acrylate, 3-phenoxy-2-hydroxypropyl (meth)acrylate, 2-chloroethyl (meth)acrylate, glycidyl (meth)acrylate, 3,4-epoxycyclohexylmethyl (meth)acrylate, vinyl (meth)acrylate, 2-phenylvinyl (meth)acrylate, 1-propenyl (meth)acrylate, allyl (meth)acrylate, 2-allyloxyethyl (meth)acrylate, propargyl (meth)acrylate, benzyl (meth)acrylate, diethylene glycol monomethyl ether (meth)acrylate, diethylene glycol monoethyl ether (meth)acrylate, triethylene glycol monomethyl ether (meth)acrylate, triethylene glycol monoethyl ether (meth)acrylate, polyethylene glycol monomethyl ether (meth)acrylate, polyethylene glycol monoethyl ether (meth)acrylate, β-phenoxyethoxyethyl (meth)acrylate, nonylphenoxypolyethylene glycol (meth)acrylate, dicyclopentenyl (meth)acrylate, dicyclopentenyloxyethyl (meth)acrylate, trifluoroethyl (meth)acrylate, octafluoropentyl (meth)acrylate, perfluorooctylethyl (meth)acrylate, dicyclopentanyl (meth)acrylate, tribromophenyl (meth)acrylate, tribromophenyloxyethyl (meth)acrylate, and γ-butyrolactone (meth)acrylate.

Examples of the vinyl ester derivative include vinyl acetate, vinyl chloroacetate, vinyl propionate, vinyl butyrate, vinyl methoxyacetate, and vinyl benzoate.

Examples of the maleic acid diester derivative include dimethyl maleate, diethyl maleate, and dibutyl maleate.

Examples of the fumaric acid diester derivative include dimethyl fumarate, diethyl fumarate, and dibutyl fumarate.

Examples of the itaconic acid diester derivative include dimethyl itaconate, diethyl itaconate, and dibutyl itaconate.

Examples of the (meth)acrylamide derivative include (meth)acrylamide, N-methyl (meth)acrylamide, N-ethyl (meth)acrylamide, N-propyl (meth)acrylamide, N-isopropyl (meth)acrylamide, N-n-butylacryl (meta)amide, N-t-butyl (meth)acrylamide, N-cyclohexyl (meth)acrylamide, N-(2-methoxyethyl)(meth)acrylamide, N,N-dimethyl (meth)acrylamide, N,N-diethyl (meth)acrylamide, N-phenyl (meth)acrylamide, N-nitrophenyl acrylamide, N-ethyl-N-phenyl acrylamide, N-benzyl (meth)acrylamide, (meth)acryloylmorpholine, diacetone acrylamide, N-methylolacrylamide, N-hydroxyethylacrylamide, vinyl (meth)acrylamide, N,N-diallyl (meth)acrylamide, and N-allyl (meth)acrylamide.

Examples of the styrene derivative include styrene, methylstyrene, dimethylstyrene, trimethylstyrene, ethylstyrene, isopropylstyrene, butylstyrene, hydroxystyrene, methoxystyrene, butoxystyrene, acetoxystyrene, chlorostyrene, dichlorostyrene, bromostyrene, chloromethylstyrene, and $\alpha$-methylstyrene.

Examples of the vinyl ether derivative include methyl vinyl ether, ethyl vinyl ether, 2-chloroethyl vinyl ether, hydroxyethyl vinyl ether, propyl vinyl ether, butyl vinyl ether, hexyl vinyl ether, octyl vinyl ether, methoxyethyl vinyl ether, and phenyl vinyl ether.

Examples of the vinyl ketone derivative include methyl vinyl ketone, ethyl vinyl ketone, propyl vinyl ketone, and phenyl vinyl ketone.

Examples of the olefin derivative include ethylene, propylene, isobutylene, butadiene, and isoprene.

Examples of the maleimide derivative include maleimide, butylmaleimide, cyclohexylmaleimide, and phenylmaleimide.

In addition, (meth)acrylonitrile, a heterocyclic group substituted by a vinyl group (e.g., vinylpyridine, N-vinylpyrrolidone, or vinylcarbazole), N-vinylformamide, N-vinylacetamide, N-vinylimidazole, and vinylcaprolactone may also be used.

[Functional Group]

The vinyl resin used in the present invention preferably has functional groups. This is because, in such a case, the interaction that occurs between the vinyl resin and a diluent resin may enhance the physical properties of the resulting molded body, such as mechanical properties. Specific examples of the functional groups include a halogen group (e.g., fluorine or chlorine), a hydroxyl group, a carboxyl group, an amino group, a silanol group, and a cyano group. The vinyl resin used in the present invention may have plural types of functional groups.

The vinyl resin may be produced by heating the above-described vinyl monomer in a reaction container in the presence of a polymerization initiator and, as needed, curing the resulting resin. The reaction conditions vary depending on the polymerization initiator and solvent used. The reaction temperature is, for example, 30°C to 150°C and is preferably 60°C to 120°C. Polymerization may be performed in the presence of a nonreactive solvent.

Examples of the polymerization initiator include peroxides such as t-butyl peroxybenzoate, di-t-butyl peroxide, cumene perhydroxide, acetyl peroxide, benzoyl peroxide, and lauroyl peroxide; and azo compounds such as azobisisobutyronitrile, azobis-2,4-dimethylvaleronitrile, and azobiscyclohexanecarbonitrile.

Examples of the nonreactive solvent include aliphatic hydrocarbon solvents such as hexane and mineral spirits; aromatic hydrocarbon solvents such as benzene, toluene, and xylene; ester solvents such as butyl acetate; alcohol solvents such as methanol and butanol; and aprotic polar solvents such as dimethylformamide, dimethyl sulfoxide, N-methylpyrrolidone. These solvents may be used alone or in combination of two or more.

In the present invention, the above-described vinyl resins may be used alone or in combination of two or more.

The vinyl resin used in the present invention may be a straight-chain polymer or a branched polymer. The branched polymer may have a comb-like shape or a star-like shape.

[Molecular Weight]

The number-average molecular weight of the vinyl resin used in the present invention is preferably 3000 or less. Although the detailed reason for this is not clear, this is presumably because a vinyl resin having a number-average molecular weight of 3000 or less has a strong affinity for cellulose fibers.

[Acid Value]

In the case where the number-average molecular weight of the vinyl resin used in the present invention is 3000

or less, it is more preferable that the acid value of the vinyl resin is 30 KOHmg/g or more and less than 60 KOHmg/g.

[Hydroxyl Group Value]

In the case where the number-average molecular weight of the vinyl resin used in the present invention is 3000 or less, the hydroxyl value of the vinyl resin is preferably 30 KOHmg/g or more and is more preferably 50 KOHmg/g or more.

In the case where the number-average molecular weight of the vinyl resin used in the present invention is 3000 or less, it is particularly preferable that the acid value of the vinyl resin is 30 KOHmg/g or more and less than 60 KOHmg/g and that the hydroxyl group value of the vinyl resin is 30 KOHmg/g or more.

[Modified Epoxy Resin]

The modified epoxy resin used in the present invention is a modified epoxy resin that has epoxy groups and has a hydroxyl group value of 100 mgKOH/g or more.

The modified epoxy resin may be produced by reacting an epoxy resin (B) with a compound (C) having carboxyl groups or amino groups.

[Epoxy Resin (B)]

The epoxy resin (B) used in the present invention is a compound having an epoxy group in its molecule. Any epoxy resin may be used as long as it reacts with the below-described compound (C) having carboxyl groups or amino groups to produce a modified epoxy resin (A) having a hydroxyl group value of 100 mgKOH/g or more. The structure and the like of the epoxy resin (B) are not particularly limited. Examples of the epoxy resin (B) that is a polyvalent epoxy resin include a bisphenol A-type epoxy resin, a bisphenol F-type epoxy resin, a bisphenol AD-type epoxy resin, a bisphenol S-type epoxy resin, a phenol novolac-type epoxy resin, a cresol novolac-type epoxy resin, a p-tert-butyl phenol novolac-type epoxy resin, a nonylphenol novolac-type epoxy resin, and a t-butylcatechol-type epoxy resin. Examples of the epoxy resin (B) that is a monovalent epoxy resin include a condensation product of epihalohydrin with an aliphatic alcohol such as butanol, with an aliphatic alcohol having a carbon number of 11 or 12, or with a monovalent phenol such as phenol, p-ethylphenol, o-cresol, m-cresol, p-cresol, p-tertiary-butylphenol, s-butylphenol, nonylphenol, or xylenol; and a condensation product of epihalohydrin with a monovalent carboxyl group such as neodecanoic acid. Examples of the epoxy resin (B) that is a glycidyl amine include a condensation product of diaminodiphenylmethane with epihalohydrin. Examples of the epoxy resin (B) that is a polyvalent aliphatic epoxy resin include a polyglycidyl ether of a vegetable oil such as soybean oil or castor oil. Examples of the epoxy resin (B) that is a polyvalent alkylene glycol-type epoxy resin include a condensation product of epihalohydrin with ethylene glycol, propylene glycol, 1,4-butanediol, 1,6-hexanediol, glycerin, erythritol, polyethylene glycol, polypropylene glycol, polytetramethylene ether glycol, or trimethylolpropane; and the water-soluble epoxy resin described in Japanese Unexamined Patent Application Publication No. 2005-239928. The above-described epoxy resins may be used alone or in combination of two or more.

Optionally, an organic solvent, a nonreactive diluent, or the like may be added to the epoxy resin (B) as needed in order to liquefy the epoxy resin (B) or to reduce the viscosity of the epoxy resin (B).

[Compound (C) Having Carboxyl Groups or Amino Groups]

The compound (C) having carboxyl groups or amino groups which is used in the present invention reacts with the above-described epoxy resin (B) to produce a modified epoxy resin having a hydroxyl group value of 100 mgKOH/g or more. One or more compounds selected from a compound (C1) having carboxyl groups, a compound (C2) having amino groups, and a compound (C3) having carboxyl groups and amino groups may be used as the compound (C) having carboxyl groups or amino groups.

It is particularly preferable that the compound (C) having carboxyl groups or amino groups is a compound (C4) having hydroxyl groups in addition to carboxyl groups and amino groups because the compound (C4) imparts a high hydroxyl group value to the modified epoxy resin (A) when reacted with the epoxy compound (B).

[Compound (C1) Having Carboxyl Groups]

The compound (C1) having carboxyl groups which is used in the present invention is a compound having one or more carboxyl groups. Specific examples of a compound having one carboxyl group include fatty acids such as formic acid, acetic acid, propionic acid, butanoic acid, pentanoic acid, hexanoic acid, heptanoic acid, octanoic acid, nonanoic acid, decanoic acid, chloroacetic acid, trifluoroacetic acid, isopropyl acid, isostearic acid, and neodecanoic acid; and aromatic carboxylic acids such as benzoic acid, methylbenzoic acid, dimethylbenzoic acid, trimethylbenzoic acid, phenylacetic acid, 4-isopropylbenzoic acid, 2-phenylpropanoic acid, 2-phenylacrylic acid, 3-phenylpropanoic acid, and cinnamic acid. Specific examples of a compound having two or more carboxyl groups include carboxylic acids such as succinic acid, adipic acid, terephthalic acid, isophthalic acid, and pyromellitic acid and anhydrides of these carboxylic acids; maleic acid, maleic anhydride, fumaric acid, itaconic acid, citraconic acid, chloromaleic acid, and esters of these compounds; halogenated maleic anhydride; $\alpha,\beta$-unsaturated dibasic acids such as aconitic acid; and $\beta,\gamma$-unsaturated dibasic acids such as dihydromuconic acid. Examples of a compound having two or more carboxyl groups that is a saturated dibasic acid or a saturated dibasic acid anhydride include phthalic acid, phthalic anhydride, a halogenated phthalic anhydride, isophthalic acid, terephthalic acid, nitrophthalic acid, tetrahydrophthalic acid, tetrahydrophthalic anhydride, endo-methylene-tetrahydrophthalic anhydride, a halogenated phthalic anhydride, and esters of these compounds. Specific examples thereof include hexahydrophthalic acid, hexahydrophthalic anhydride, hexahydroterephthalic acid, hexahydroisophthalic acid, 1,4-cyclohexanedicarboxylic acid, 1,3-cyclohexanedicarboxylic acid, methylhexahydrophthalic acid, HET acid, 1,1-cyclobutanedicarboxylic acid, oxalic acid, succinic acid, succinic anhydride, malonic acid, glutaric acid, adipic acid, azelaic acid, pimelic acid, suberic acid, azelaic acid, sebacic acid, 1,12-dodecanedioic acid, 2,6-naphthalenedicarboxylic acid, 2,7-naphthalenedicarboxylic acid, 2,3-naphthalenedicarboxylic acid, 2,3-naphthalenedicarboxylic anhydride, and 4,4'-biphenyldicarboxylic acid.

[Compound (C2) Having Amino Groups]

The compound (C2) having amino groups which is used in the present invention is a compound having one or more amino groups. Specific examples of a compound having one amino group include methylamine, ethylamine, dimethylamine, diethylamine, propylamine, butylamine, N,N-dimethyl-2-propanamine, aniline, toluidine, and 2-aminoanthracene. Examples of a compound having two or more amino groups include ethylenediamine, 1,3-propanediamine, 1,4-butanediamine, 1,6-hexamethylenediamine, 1,4-cyclohexanediamine, 3-aminomethyl-3,5,5-trimethylcyclohexylamine, piperazine, 2,5-dimethylpiperazine, isophorone diamine, 4,4'-cyclohexylmethanediamine, norbornane diamine, hydrazine, diethylenetriamine, triethylenetriamine, 1,3-bis(aminomethyl)cyclohexane, and xylylenediamine.

[Compound (C3) Having Carboxyl Groups and Amino Groups]

The compound (C3) having carboxyl groups and amino groups which is used in the present invention is a compound having one or more carboxyl groups and one or more amino groups. Typical examples of the compound (C3) include amino acids, which may optionally have hydroxyl groups. Specific examples of the amino acids include alanine, arginine, asparagine, aspartic acid, cysteine, glutamine, glutamic acid, glycine, histidine, isoleucine, leucine, lysine, methionine, phenylalanine, proline, serine, threonin, tryptophan, tyrosine, valine, aminobutyric acid, theanine, tricholomic acid, and kainic acid.

[Compound (C4) Further Having Hydroxyl Groups in Addition to Carboxyl Groups or Amino Groups]

The compound (C4) further having hydroxyl groups in addition to carboxyl groups or amino groups is a compound further having one or more hydroxyl groups in addition to carboxyl groups or amino groups. Specific examples of the compound (C4) include glycolic acid, glyceric acid, hydroxypropionic acid, hydroxybutyric acid, malic acid, 2,3-dihydroxybutanedioic acid, citric acid, isocitric acid, mevalonic acid, pantothenic acid, ricinoleic acid, dimethylolpropionic acid, dimethylolbutanoic acid, hydroxyphenylpropanoic acid, mandelic acid, benzilic acid, hydroxymethylamine, hydroxyethylamine, and hydroxypropylamine.

[Production of Modified Epoxy Resin]

The modified epoxy resin used in the present invention having a hydroxyl group value of 100 mgKOH/g or more may be produced by reacting epoxy groups of the epoxy resin (B) with carboxyl groups or amino groups of the compound (C) having carboxyl groups or amino groups. If the hydroxyl group value of the modified epoxy resin is less than 100 mgKOH/g, the affinity of the modified epoxy resin for cellulose is reduced, which disadvantageously makes cellulose to be less likely to be fibrillated into cellulose nanofibers. The reaction ratio of the epoxy groups to the carboxyl groups or amino groups may be set appropriately so that a hydroxyl group value of 100 mgKOH/g or more is achieved and a desired amount of epoxy groups remain.

The number of epoxy groups per molecule of the modified epoxy resin is preferably 0.3 or more, is more preferably 0.5 or more, and is most preferably 1 or more.

The modified epoxy resin may be produced in the absence of a solvent or in a solvent. It is preferable to perform the reaction in the absence of a solvent because, in such a case, removal of a solvent can be omitted.

There is no particular limitation for a polymerization solvent to be used. Examples thereof include methanol,

ethanol, isopropanol, 1-butanol, tertiary butanol, isobutanol, diacetone alcohol, acetone, methyl ethyl ketone, diethyl ketone, methyl isobutyl ketone, cyclohexanone, dibutyl ether, tetrahydrofuran, dioxane, ethylene glycol monomethyl ether, diethylene glycol monomethyl ether, diethylene glycol monoethyl ether, diethylene glycol diethyl ether, butyl cellosolve, toluene, xylene, ethyl acetate, and isobutyl acetate. These solvents may be used alone or in a mixture thereof.

Optionally, a Lewis acid catalyst and a Lewis base catalyst may be used as a reaction catalyst. Specific examples thereof include boron trifluoride, benzyltrimethylammonium chloride, dimethylaminopyridine, pyridine, 8-diazabicyclo[5.4.0]undecane-7-ene, and triphenylphosphine.

The reaction temperature is preferably between room temperature to 200°C.

[Ratio between Fibrillation Resin and Cellulose]

In the present invention, the ratio between the fibrillation resin and cellulose may be changed appropriately. In the case where mixing with a curing agent or a diluent resin is performed after fibrillation, the higher the cellulose concentration in the fibrillation resin, the greater the resin-strengthening effect. On the other hand, if the proportion of the fibrillation resin is excessively small, cellulose may fail to be fibrillated to a sufficient degree. The proportion of cellulose contained in a composition including cellulose and a fibrillation resin is 10% by mass to 90% by mass, is preferably 30% by mass to 80% by mass, and is more preferably 40% by mass to 70% by mass.

[Cyclic Polybasic Acid Anhydride (A)]

In the present invention, after producing cellulose nanofibers by fibrillating cellulose in a fibrillation resin, a cyclic polybasic acid anhydride (A) is further added to the resulting mixture to react hydroxyl groups of the cellulose nanofibers with the cyclic polybasic acid anhydride (B) in the fibrillation resin in order to produce modified cellulose nanofibers.

An example of the cyclic polybasic acid anhydride (A) used in the present invention is the compound represented by Structural Formula (1).

[Chem. 2]

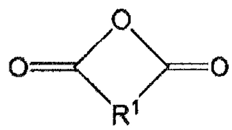

... (1)

(In Structural Formula (1), $R^1$ represents a straight-chain or branched-chain alkylene group having a carbon number of 15 or less, a straight-chain or branched-chain alkenylene group having a carbon number of 15 or less, or a substituent having a cyclic structure. Optionally, the cyclic acid anhydride may be bonded to another cyclic acid anhydride via the substituent to form a multimer)

Specific examples of the cyclic polybasic acid anhydride (A) include the following compounds.

Examples of the cyclic polybasic acid anhydride (A) having $R^1$ that is a straight-chain or branched-chain alkylene group or a straight-chain or branched-chain alkenylene group include malonic anhydride, succinic anhydride, glutaric anhydride, adipic anhydride, pimelic anhydride, suberic anhydride, azelaic anhydride, sebacic anhydride, and maleic anhydride.

Examples of the substituent having a cyclic structure include five- to ten-membered rings. The substituent having a cyclic structure may have a polycyclic structure including a plurality of cyclic structures or may be an aromatic ring. Examples of the cyclic polybasic acid anhydride (A) that includes a six-membered ring include the following skeletons.

[Chem. 3]

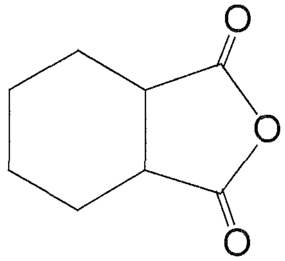

[Chem. 4]

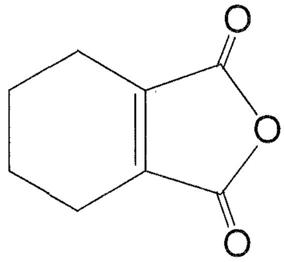

[Chem. 5]

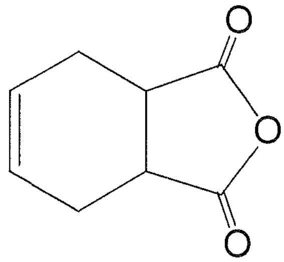

[Chem. 6]

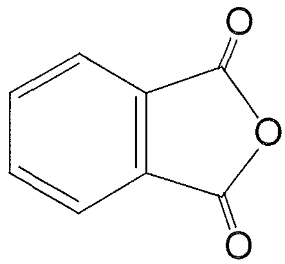

Specific examples of the cyclic polybasic acid anhydride (A) that includes a six-membered ring include hexahydrophthalic anhydride, methylhexahydrophthalic anhydride, tetrahydrophthalic anhydride, methyltetrahydrophthalic anhydride, cis-4-cyclohexene-1,2-dicarboxylic anhydride, 4-methyl-4-cyclohexene-1,2-dicarboxylic anhydride, methylbutenyl tetrahydrophthalic anhydride, phthalic anhydride, trimellitic anhydride, pyromellitic anhydride, methylendomethylenetetrahydrophthalic anhydride, and endomethylenetetrahydrophthalic anhydride.

In Structural Formula (1), $R^1$ may be provided so that the cyclic acid anhydride is bonded to another cyclic acid anhydride via a substituent to form a multimer. Specific examples of such a multimer include benzophenonetetracarboxylic anhydride shown below.

[Chem. 7]

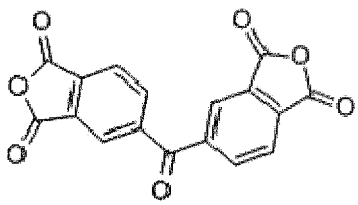

[Reaction Between Cellulose Nanofibers and Cyclic Polybasic Acid Anhydride (A)]

In order to react cellulose nanofibers produced by fibrillating cellulose in a fibrillation resin with the cyclic

polybasic acid anhydride (A), the cyclic polybasic acid anhydride (A) is added to a mixture of the fibrillation resin and the cellulose nanofibers and subsequently hydroxyl groups of the cellulose nanofibers are reacted with the cyclic polybasic acid anhydride (A) by a publicly known method. Specifically, the mixture is heated at about 60°C to about 140°C while being mixed. For example, dispersing devices, stirring devices, and kneading devices, such as various kneaders, various mixers, various mills, various homogenizers, a dissolver, a grinder, and various extruders, may be suitably used.

A catalyst may be used in order to promote the reaction between hydroxyl groups of the cellulose nanofibers and the cyclic polybasic acid anhydride (A). The catalyst may be a basic catalyst, an addition esterification catalyst, or the like, such as sodium carbonate, dimethylbenzylamine, tetramethylammonium chloride, and pyridine.

[Mixing Ratio Between Cellulose Nanofibers and Cyclic Polybasic Acid Anhydride (A)]

In the present invention, the mixing ratio between the cellulose nanofibers and the cyclic polybasic acid anhydride (A) may be set appropriately as long as the advantages if the present invention are not impaired. The mixing ratio between the cellulose nanofibers and the cyclic polybasic acid anhydride (A), that is, (Z-Y)/X, is preferably 0.1 to 10, is more preferably 0.2 to 7, and is most preferably 0.3 to 5, where X represents the number of moles of hydroxyl groups of the cellulose nanofibers, Y represents the number of moles of hydroxyl groups contained in the fibrillation resin, and Z represents the number of moles of acid anhydride groups of the cyclic polybasic acid anhydride (A).

[Modified Cellulose Nanofibers]

The modified cellulose nanofibers according to the present invention may be produced through the above-described steps. The modified cellulose nanofibers according to the present invention, which are produced by reacting hydroxyl groups of cellulose nanofibers with the cyclic polybasic acid anhydride (A), have the functional groups represented by Structural Formula (2) below.

[Chem. 8]

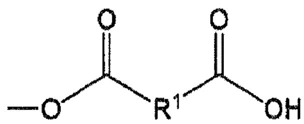

... (2)

(In Structural Formula (2), $R^1$ represents a straight-chain or branched-chain alkylene group having a carbon number of 15 or less, a straight-chain or branched-chain alkenylene group having a carbon number of 15 or less, or a substituent having a cyclic structure. The cyclic acid anhydride may be bonded to another cyclic acid anhydride via a substituent to form a multimer)

The number of moles of the functional groups represented by Structural Formula (4) above which are included in the modified cellulose nanofibers as substituents is preferably 0.1 to 1.0 moles, is more preferably 0.2 to 0.7 moles, and is most preferably 0.2 to 0.5 moles per glucose unit of the cellulose nanofibers. If the substitution number is small, the advantageous effect of modification may fail to be produced. If the substitution number is too large, the fiber form of the modified cellulose nanofibers may fail to be maintained and the modified cellulose nanofibers may fail to serve as fibers.

[Masterbatch]

The masterbatch according to the present invention is a composition including a fibrillation resin and the modified cellulose nanofibers. In the case where the fibrillation resin has hydroxyl groups, the fibrillation resin may be a modified fibrillation resin that has been reacted with the cyclic polybasic acid anhydride (A). The masterbatch according to the present invention may be used directly after a cellulose fibrillation step or a cellulose nanofiber modification step without being purified. Since water and a hydrophilic solvent are not used for producing the masterbatch, the masterbatch has very strong affinity for resins. Therefore, the masterbatch can be mixed with a dilution resin even when the concentration of the modified cellulose nanofibers is high. The masterbatch or a mixture prepared by adding a curing agent to the masterbatch may be directly used as a resin composition.

The masterbatch according to the present invention includes, as essential components, a fibrillation resin or a modified fibrillation resin; and cellulose nanofibers produced by fibrillating cellulose. Various types of resins, additives, organic or inorganic fillers, and the like may be added to the masterbatch as long as the advantages of the present invention are not impaired. Various types of resins, additives, organic or inorganic fillers, and the like may be added to

the masterbatch prior to or subsequent to fibrillation of cellulose. However, it is undesirable to add a resin, an additive, an organic or inorganic filler, or the like that requires an impurity removal step such as drying or purification to be performed prior to mixing the masterbatch with a curing agent or a diluent resin in the subsequent step because such a resin, an additive, an organic or inorganic filler, or the like impairs the advantages of the present invention.

[Curing Agent]

In the case where the fibrillation resin and the diluent resin used in the present invention include a resin having epoxy groups, a curing agent may be used. Examples of the curing agent used in the present invention include a latent curing agent, a polyamine compound, a polyphenol compound, and a cationic photoinitiator.

Examples of the latent curing agent include dicyandiamide, hydrazide, an imidazole compound, an amine adduct, a sulfonium salt, an onium salt, ketimine, an acid anhydride, and tertiary amine. These latent curing agents may be preferably used because they allow one-component curable composition to be produced and are easy to handle.

Examples of the acid anhydride include hexahydrophthalic anhydride, methylhexahydrophthalic anhydride, tetrahydrophthalic anhydride, methyltetrahydrophthalic anhydride, cis-4-cyclohexene-1,2-dicarboxylic anhydride, 4-methyl-4-cyclohexene-1,2-dicarboxylic anhydride, methylbutenyl tetrahydrophthalic anhydride, phthalic anhydride, trimellitic anhydride, pyromellitic anhydride, methylendomethylenetetrahydrophthalic anhydride, endomethylenetetrahydrophthalic anhydride, benzophenonetetracarboxylic anhydride, maleic anhydride, and succinic anhydride.

Examples of the polyamine compound include aliphatic polyamines such as ethylenediamine, diethylenetriamine, and triethylenetetramine; alicyclic polyamines such as menthanediamine, isophoronediamine, bis(4-amino-3-methylcyclohexyl)methane, bis(aminomethyl)cyclohexane, and 3,9-bis(3-aminopropyl)-2,4,8,10-tetraoxaspiro[5,5]undecane; aliphatic amines having an aromatic ring, such as m-xylenediamine; aromatic polyamines such as m-phenylenediamine, 2,2-bis(4-aminophenyl)propane, diaminodiphenylmethane, diaminodiphenylsulfone, and $\alpha,\alpha$-bis(4-aminophenyl)-p-diisopropylbenzene.

Examples of the polyphenol compound include phenol novolac, o-cresol novolac, t-butylphenol novolac, dicyclopentadiene cresol, terpene diphenol, terpene dicatechol, 1,1,3-tris(3-tertiary butyl-4-hydroxy-6-methylphenyl)butane, and butylidenebis(3-tertiary butyl-4-hydroxy-6-methylphenyl).

The cationic photoinitiator is a compound capable of producing a substance that initiates cationic polymerization when irradiated with an energy beam. In particular, a double salt that is an onium salt that produces a Lewis acid when irradiated with an energy beam and a derivative of such a double salt, are preferably used.

[Diluent Resin]

The masterbatch including the modified cellulose nanofibers according to the present invention is mixed with a diluent resin to prepare a resin composition. The strength of the resin composition can be increased by mixing the masterbatch including the modified cellulose nanofibers according to the present invention, the masterbatch serving as reinforcements for resins, with the diluent resin. The diluent resin is not particularly limited, and any diluent resin may be used as long as it is capable of being mixed with the masterbatch. The diluent resin may be a monomer or a polymer. Both a thermoplastic resin and a thermosetting resin may be used. A single diluent resin may be used, or a plurality of diluent resins may be used in combination.

Thermoplastic resins are resins capable of being melt by being heated and molded into shape. Specific examples thereof include a polyethylene resin, a polypropylene resin, a polystyrene resin, a rubber-modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylene vinyl alcohol resin, a cellulose acetate resin, an ionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyetherimide resin, a polyethersulfone resin, a polyarylate resin, a thermoplastic polyimide resin, a polyamide-imide resin, a polyether ether ketone resin, a polyketone resin, a liquid-crystal polyester resin, a fluororesin, a syndiotactic polystyrene resin, and a cyclic polyolefin resin. These thermoplastic resins may be used alone or in combination of two or more.

Thermosetting resins are resins that become substantially insoluble and infusible when cured due to heating, radiation, a catalyst, or the like. Specific examples thereof include a phenol resin, a urea resin, a melamine resin, a benzoguanamine resin, an alkyd resin, an unsaturated polyester resin, a vinyl ester resin, a diallyl terephthalate resin, an epoxy resin, a silicone resin, a urethane resin, a furan resin, a ketone resin, a xylene resin, and a thermosetting polyimide resin. These thermosetting resins may be used alone or in combination of two or more. In the case where the main component of the resin used in the present invention is a thermoplastic resin, a small amount of thermosetting resin may be added to the resin as long as it does not impair the characteristics of the thermoplastic resin. Conversely, in the case where the main component of the resin used in the present invention is a thermosetting resin, a small amount

of thermoplastic resin may be added to the resin as long as it does not impair the characteristics of the thermosetting resin.

[Mixing Ratio in Resin Composition]

The proportion of modified cellulose nanofibers mixed in the resin composition may be set appropriately as long as the advantages of the present invention are not impaired. The proportion of cellulose nanofibers is preferably 0.1% by mass to 30% by mass relative to 100% by mass of the total mass of the cellulose nanofibers that have not yet been modified, the cyclic polybasic acid anhydride (A), the fibrillation resin, and the diluent resin (E).

[Other Additives]

Any publicly known additives may be added to the resin composition depending on the application as long as the advantages of the present invention are not impaired. Examples of such additives include an anti-hydrolysis agent, a colorant, a flame retardant, an antioxidant, a polymerization initiator, a polymerization inhibitor, an ultraviolet absorber, an antistatic agent, a lubricant, a mold release agent, an antifoaming agent, a levelling agent, a photostabilizer (e.g., hindered amine), an antioxidant, an inorganic filler, and an organic filler.

The resin composition of the present invention may be used as a molding material, a coating material, a painting material, or an adhesive.

[Molding Method]

A method for forming a molded body of the resin composition according to the present invention is not particularly limited. In order to form a sheet-like product, an extrusion method is generally employed. Alternatively, flat pressing may also be employed. Furthermore, a contour extrusion method, a blow molding method, a compression molding method, a vacuum molding method, and an injection molding method may also be employed. In order to form a film-like product, a melt extrusion method and a solution cast method may be employed. In the case where a melt molding method is employed, inflation film molding, cast molding, extrusion lamination molding, calendar molding, sheet molding, fiber molding, blow molding, injection molding, rotational molding, and coating molding may be employed. In the case where a resin that cures when irradiated with an activation energy beam is used, various curing method in which an active energy beam is utilized may be employed in order to form a molded body.

[Application]

The resin composition according to the present invention may be suitably used in various applications such as automotive parts, aircraft parts, electronic and electric components, building materials, container and packaging materials, housewares, and sporting and leisure goods. However, the application of the resin composition is not limited to the above-described applications.

EXAMPLES

Embodiments of the present invention are described below further in detail. However, the present invention is not limited to the examples below.

[Method for Synthesizing Polyester Resin]

(Synthesis Example 1) Preparation of Polyester Resin 1

Into a 2-L glass flask equipped with a nitrogen gas introduction tube, a reflux condenser, and a stirrer, 758.2 parts (7.14 mol, molar charge ratio: 0.53) of diethylene glycol, 652.6 parts (4.47 mol, molar charge ratio: 0.33) of adipic acid, and 183.9 parts (1.88 mol, molar charge ratio: 0.14) of maleic anhydride were charged. Heating of the resulting mixture was started under a stream of nitrogen. While the internal temperature was kept at 200°C, a dehydration-condensation reaction was performed in a usual manner. The temperature was reduced to 150°C immediately after the acid value reached 13 KOHmg/g. Subsequently, 2,6-di-tert-butyl-p-cresol was added to the flask at 100 ppm relative to the weight of the raw materials charged. Then, the temperature was further reduced to room temperature. Thus, a polyester resin 1 having a hydroxyl group value of 89 KOHmg/g and an ester group concentration of 9.07 mmol/g was prepared.

(Synthesis Example 2) Preparation of Polyester Resin 2

Into a 2-L glass flask equipped with a nitrogen gas introduction tube, a reflux condenser, and a stirrer, 603.6 parts (9.74 mol, molar charge ratio: 0.49) of ethylene glycol, 715.8 parts (7.16 mol, molar charge ratio: 0.36) of succinic anhydride, and 280.6 parts (2.86 mol, molar charge ratio: 0.15) of maleic anhydride were charged. Heating of the resulting mixture was started under a stream of nitrogen. While the internal temperature was kept at 200°C, a dehydration-condensation reaction was performed in a usual manner. The temperature was reduced to 150°C immediately after the acid value reached 65 KOHmg/g. Subsequently, 2,6-di-tert-butyl-p-cresol was added to the flask at 100 ppm relative to the weight of the raw materials charged. Then, the temperature was further reduced to room temperature. Thus, a polyester resin 2 having a hydroxyl group value of 60 KOHmg/g and an ester group concentration of 12.6 mmol/g was prepared.

[Method for Calculating Ester Group Concentration]

The ester group concentration was calculated using Expression (1) below.

Ester Group Concentration (mmol/g) = Amount of Ester Groups Generated (mol)/[Amount of Monomers Charged (wt) - Amount of Water Generated (wt)] × 1000 ... (1)

A method for calculating the ester group concentration is described below further in detail taking the polyester resin 1 as an example. The amount of ester groups generated was calculated assuming that the whole quantity of the charged monomers undergoes an esterification reaction.

Amount of Ester Groups Generated = Adipic Acid 4.47 mol × 2 + Maleic Anhydride 1.88 mol × 2 = 12.70 mol

The amount of water generated was also calculated, similarly to the amount of ester groups, assuming that the whole quantity of the charged monomers undergoes an esterification reaction.

Amount of Water Generated = (Adipic Acid 4.47 mol × 2 + Maleic Anhydride 1.88 mol) × 18.02 = 194.98

Thus, the ester group concentration of the polyester resin 1 can be calculated using Expression (2) below.

Ester Group Concentration (mmol/g) = 12.70 mol/[1594.70 - 194.98] × 1000 = 9.07 ... (2)

[Measurement of Acid Value]

The acid value herein refers to the weight (mg) of potassium hydroxide used for neutralizing 1 g of a polyester resin and measured in mgKOH/g.
The acid value was calculated by dissolving a polyester resin in tetrahydrofuran and titrating the resulting solution with a 0.1-N potassium hydroxide solution in methanol.

[Measurement of Hydroxyl Group Value]

The hydroxyl group value herein refers to the weight (mg) of potassium hydroxide having the same number of moles as OH groups contained in 1 g of a polyester resin and measured in mgKOH/g.

The hydroxyl group value was calculated from the area of a peak in a 13C-NMR spectrum which is derived from hydroxyl groups. The apparatus used in the measurement was JNM-LA300 produced by JEOL Ltd. To a sample that was a 10-wt% deuterated chloroform solution, 10 mg of Cr(acac)3, which served as a shiftless relaxation reagent, was added. Then, a quantitative 13C-NMR measurement was conducted by a gated decoupling method. The number of scans was 4000.

[Method for Fibrillating Cellulose in Resin]

(Production Example 1) Preparation of Mixture 1 of Resin and Cellulose Nanofibers

Into a pressure kneader (DS1-5GHH-H) produced by Moriyama Works, 600 g of the polyester resin 1 synthesized in Synthesis Example 1 and 400 g of a cellulose powder product "KC Flock W-50GK" produced by Nippon Paper Industries Co., Ltd. were charged. The resulting mixture was kneaded at 60 rpm for 600 minutes under pressure to fibrillate cellulose. Thus, a mixture 1 of a resin and cellulose nanofibers was prepared. A 0.1 g aliquot of the mixture 1 was taken and added to acetone to form a suspension having a concentration of 0.1%. The suspension was subjected to a dispersion treatment using TK HOMO MIXER TYPE-A produced by Tokushu Kika Kogyo Co., Ltd. at 15000 rpm for 20 minutes. The resulting dispersion was spread on glass to vaporize acetone. Then, the state of cellulose fibrillation was confirmed using a scanning electron microscope. The presence of cellulose nanofibers that had been fibrillated such that the length of the fibers in the short-axis direction was less than 100 nm confirmed that fibrillation of cellulose was performed satisfactorily.

(Production Example 2) Preparation of Mixture 2 of Resin and Cellulose Nanofibers

Into a pressure kneader (DS1-5GHH-H) produced by Moriyama Works, 600 g of the polyester resin 2 synthesized in Synthesis Example 2 and 400 g of a cellulose powder product "KC Flock W-50GK" produced by Nippon Paper Industries Co., Ltd. were charged. The resulting mixture was kneaded at 60 rpm for 600 minutes under pressure to fibrillate cellulose. Thus, a mixture 2 of a resin and cellulose nanofibers was prepared. A 0.1 g aliquot of the mixture 2 was taken and added to acetone to form a suspension having a concentration of 0.1%. The suspension was subjected to a dispersion treatment using TK HOMO MIXER TYPE-A produced by Tokushu Kika Kogyo Co., Ltd. at 15000 rpm for 20 minutes. The resulting dispersion was spread on glass to vaporize acetone. Then, the state of cellulose fibrillation was confirmed using a scanning electron microscope. The presence of cellulose nanofibers that had been fibrillated such that the length of the fibers in the short-axis direction was less than 100 nm confirmed that fibrillation of cellulose was performed satisfactorily.

[Method for Modifying Cellulose Nanofibers in Resin]

(Example 1) Preparation of Masterbatch 1 Including Modified Cellulose Nanofibers

Into a 200-ml resolvable kneader produced by Yoshida Seisakusho Co., Ltd., 70.8 g of the mixture 1 of a resin and cellulose nanofibers, which was prepared in Production Example 1, and 59.2 g of succinic anhydride (first-class reagent produced by KANTO CHEMICAL CO., INC.) were charged. While the jacket temperature was kept at 100°C, the reaction was conducted at 60 rpm for 6 hours. Thus, a masterbatch 1 including modified cellulose nanofibers was prepared. A 0.1 g aliquot of the masterbatch 1 was taken and added to acetone to form a suspension having a concentration of 0.1%. The suspension was subjected to a dispersion treatment using TK HOMO MIXER TYPE-A produced by Tokushu Kika Kogyo Co., Ltd. at 15000 rpm for 20 minutes. The resulting dispersion was spread on glass to vaporize acetone. Then, the state of cellulose fibrillation was confirmed using a scanning electron microscope. Modified cellulose nanofibers that had been fibrillated such that the length of the fibers in the short-axis direction was less than 100 nm were present. The degree of substitution (DS) of the modified cellulose nanofibers was 0.35.

<Calculation of Degree of Substitution (DS) of Modified Cellulose Nanofibers>

The degree of substitution (DS) of modified cellulose nanofibers herein refers to the number of moles of a polybasic acid anhydride that was reacted with 1 mole of glucose units of cellulose nanofibers in the preparation of the modified cellulose nanofibers.

The degree of substitution (DS) was measured by the following method.

In a 200-ml Erlenmeyer flask, 10 g of a modified cellulose nanofiber composition was dispersed in 100 g of acetone. The resulting dispersion was filtered, and modified cellulose nanofibers that remained on filter paper were washed with acetone. The modified cellulose nanofibers were extracted and dried. Thus, a solid of the modified cellulose nanofibers was obtained. The solid was pulverized using ABSOLUTE MILL ABS-W produced by Osaka Chemical Co., Ltd.

In a 100-ml Erlenmeyer flask, about 0.5 g of the pulverized modified cellulose nanofibers was precisely weighed.

To the 100-ml Erlenmeyer flask, 15 ml of ethanol and 5 ml of distilled water were added, and the resulting mixture was stirred at room temperature for 30 minutes. To the 100-ml Erlenmeyer flask, 10 ml of a 0.5-N sodium hydroxide solution was further added. Then, a cooling tube was connected to the Erlenmeyer flask, and stirring was performed for 60 minutes in a hot-water bath kept at 80°C. Subsequently, the temperature was reduced to room temperature while stirring was performed.

To the resulting liquid mixture, a few drops of an 85% phenolphthalein solution in ethanol were added. Subsequently, the liquid mixture was back-titrated with a 0.1-N aqueous hydrochloric acid solution to measure the amount of polybasic acid generated due to hydrolysis.

The degree of substitution (DS) of the modified cellulose nanofibers was calculated using the following expression.

$$DS = X/((Y - X \times M)/162)$$

where,

X: number of moles of polybasic acid determined by back titration
M: molecular weight of a polybasic acid anhydride used for modification
Y: weight of modified cellulose nanofibers that was precisely weighed

(Example 2) Preparation of Masterbatch 2 Including Modified Cellulose Nanofibers

Into a 200-ml resolvable kneader produced by Yoshida Seisakusho Co., Ltd., 72.0 g of the mixture 2 of a resin and cellulose nanofibers, which was prepared in Production Example 2, and 58.0 g of succinic anhydride (first-class reagent produced by KANTO CHEMICAL CO., INC.) were charged. While the jacket temperature was kept at 100°C, the reaction was conducted at 60 rpm for 6 hours. Thus, a masterbatch 2 including modified cellulose nanofibers was prepared. A 0.1 g aliquot of the masterbatch 2 was taken and added to acetone to form a suspension having a concentration of 0.1%. The suspension was subjected to a dispersion treatment using TK HOMO MIXER TYPE-A produced by Tokushu Kika Kogyo Co., Ltd. at 15000 rpm for 20 minutes. The resulting dispersion was spread on glass to vaporize acetone. Then, the state of cellulose fibrillation was confirmed using a scanning electron microscope. Modified cellulose nanofibers that had been fibrillated such that the length of the fibers in the short-axis direction was less than 100 nm were present. The degree of substitution (DS) of the modified cellulose nanofibers was 0.28.

(Example 3) Preparation of Masterbatch 3 Including Modified Cellulose Nanofibers

Into a 200-ml resolvable kneader produced by Yoshida Seisakusho Co., Ltd., 82.9 g of the mixture 1 of a resin and cellulose nanofibers, which was prepared in Production Example 1, and 47.1 g of methyltetrahydrophthalic anhydride (EPICLON B-570H produced by DIC Corporation) were charged. While the jacket temperature was kept at 130°C, the reaction was conducted at 60 rpm for 6 hours. Thus, a masterbatch 3 including modified cellulose nanofibers was prepared. A 0.1 g aliquot of the masterbatch 3 was taken and added to acetone to form a suspension having a concentration of 0.1%. The suspension was subjected to a dispersion treatment using TK HOMO MIXER TYPE-A produced by Tokushu Kika Kogyo Co., Ltd. at 15000 rpm for 20 minutes. The resulting dispersion was spread on glass to vaporize acetone. Then, the state of cellulose fibrillation was confirmed using a scanning electron microscope. Modified cellulose nanofibers that had been fibrillated such that the length of the fibers in the short-axis direction was less than 100 nm were present. The degree of substitution (DS) of the modified cellulose nanofibers was 0.24.

(Example 4)

[Preparation of Resin Composition]

Then, 17.7 g of the masterbatch 1 including modified cellulose nanofibers, which was prepared in Example 1, 150.0 g of an epoxy resin EPICLON850S produced by DIC Corporation, and 150.0 g of an epoxy resin EPICLON EXA-4850-150 produced by DIC Corporation were mixed together. The resulting mixture was stirred at 12000 revolutions for 30 minutes using a stirring apparatus LABOLUTION produced by PRIMIX Corporation equipped with an impeller of Neo Mixer Model 4-2.5 produced by PRIMIX Corporation and subsequently heated at 110°C for 3 hours. After the temperature was reduced to room temperature, 68.1 g of LarominC260 produced by BASF, which served as a curing agent, was added to the mixture and the resulting mixture was further stirred. Thus, a resin composition 1 was prepared. The reduced

cellulose nanofiber content in the resin composition 1 was 1.0% by mass. The reduced cellulose nanofiber content herein refers to a value calculated by dividing the amount of cellulose nanofibers used for preparing the modified cellulose nanofibers contained in the resin composition 1 by the weight of the resin composition, which was expressed as a percentage by weight (the same applies hereinafter).

[Preparation of Molded Plate and Test Piece]

The resin composition 1 described above was degassed in a vacuum chamber and subsequently poured into a mold. heating was performed at 80°C for 1 hour to cure the resin composition, and after curing was performed at 150°C for 3 hours. Thus, a cast-molded plate having a thickness of 6 mm was prepared. No aggregation was observed in the molded plate.

A test piece having a width of 15 mm and a length of 120 mm was cut from the molded plate with a diamond cutter.

[Bending Strength Test]

The test piece was subjected to a bending strength test by a three-point bending method based on JIS-K-7074 using a universal testing system produced by Instron with a span of 90 mm at a bending speed of 5 mm/min in an atmosphere having a room temperature of 23°C and a humidity of 50%. The average of the maximum stresses (number of testing: 5) was considered to be the bending strength of the test piece. The bending strength of the test piece was 144.5 MPa.

(Example 5)

A resin composition 2 was prepared as in Example 4 except that 17.7 g of the masterbatch 1 used in Example 4 was changed to 17.4 g of the masterbatch 2 including modified cellulose nanofibers, which was prepared in Example 2. The reduced cellulose nanofiber content in the resin composition 2 was 1.0% by mass.

A molded plate and a test piece were prepared as in Example 6. A bending test was conducted as in Example 6. No aggregation was observed in the molded plate prepared from the resin composition 2. The bending strength of the molded plate was 148.3 MPa.

(Example 6)

A resin composition 3 was prepared as in Example 4 except that 17.7 g of the masterbatch 1 used in Example 4 was changed to 15.0 g of the masterbatch 3 including modified cellulose nanofibers, which was prepared in Example 3. The reduced cellulose nanofiber content in the resin composition 3 was 1.0% by mass.

A molded plate and a test piece were prepared as in Example 6. A bending test was conducted as in Example 6. No aggregation was observed in the molded plate prepared from the resin composition 3. The bending strength of the molded plate was 145.1 MPa.

(Comparative Example 1)

[Preparation of Comparative Modified Cellulose Nanofibers]

A cellulose powder product "KC Flock W-50GK" produced by Nippon Paper Industries Co., Ltd. was vacuum-dried at 110°C for 4 hours using a vacuum drier at 0.533 kPa. Into a 500-mL glass flask, 20 g of the dried cellulose powder, 100 g of toluene that had been dried using a molecular sieve, 30 g of acetic acid, 70 g of 2-dodecen-1-yl-succinic anhydride, and 10 g of pyridine were charged. A nitrogen gas introduction tube, a reflux condenser, and a stirrer were connected to the flask. The substances charged in the flask were stirred to form a homogeneous dispersion, and the reaction was performed at 80°C for 2 hours. Subsequently, the temperature was reduced to room temperature, and filtration was performed until the resulting filtrate became slurry. Washing with 100 of acetone was performed three times, and subsequently washing with ion-exchange water was performed three times. Thus, a water slurry of comparative modified cellulose nanofibers was formed. The water slurry of the comparative modified cellulose nanofibers was dispersed in water at a solid concentration of 1%. Using a grinder "Serendipiter MKCA6-3" produced by MASUKO SANGYO CO., LTD., 2000 g of the resulting dispersion was passed between disks rotating at 1500 rpm in the direction from the center of the disks toward the outside of the desks 30 times. Dispersion was performed using a bead mill (model: ECM-Pilot) produced by Willy A. Bachofen with zirconium beads having an average particle diameter of 1 μm under the following conditions.

<Fibrillation Conditions>

Vessel volume: 1.5 liters
Proportion of beads filled: 70%
Flow rate: 2800 g/min
Peripheral speed: 13 m/s
Temperature of water for cooling the vessel: 8°C
Treatment time: 30 minutes

The resulting dispersion was dried to prepare floccular comparative modified cellulose nanofibers. The state of cellulose fibrillation was confirmed using a scanning electron microscope. The comparative modified cellulose nanofibers that had been fibrillated such that the length of the fibers in the short-axis direction was less than 100 nm were present. The degree of substitution (DS) of the modified cellulose nanofibers was 0.85.

[Preparation of Comparative Resin Composition 1]

Then, 9.0 g of the comparative modified cellulose nanofibers, 150.0 g of an epoxy resin EPICLON850S produced by DIC Corporation, and 150.0 g of an epoxy resin EPICLON EXA-4850-150 produced by DIC Corporation were mixed together. The resulting mixture was stirred at 12000 revolutions for 30 minutes using a stirring apparatus LABOLUTION produced by PRIMIX Corporation equipped with an impeller of Neo Mixer Model 4-2.5 produced by PRIMIX Corporation. At that time, aggregation was observed. The aggregation was still observed even after the mixture was stirred for another 30 minutes. The mixture was heated at 110°C for 3 hours. After the temperature was reduced to room temperature, 68.1 g of LarominC260 produced by BASF, which served as a curing agent, was added to the mixture and the resulting mixture was further stirred. Thus, a comparative resin composition 1 was prepared. The reduced cellulose nanofiber content in the resin composition 5 was 1.0% by mass.

[Preparation of Molded Plate and Test Piece]

A molded plate and a test piece were prepared as in Example 4. At that time, aggregation was observed in the molded plate.

[Bending Strength Test]

A bending test was conducted as in Example 4. The bending strength of the molded plate was 80.1 MPa.

(Comparative Example 2)

In Comparative Example 2, 150.0 g of an epoxy resin EPICLON850S produced by DIC Corporation and 150.0 g of an epoxy resin EPICLON EXA-4850-150 produced by DIC Corporation were mixed together. The resulting mixture was stirred at 12000 revolutions for 30 minutes using a stirring apparatus LABOLUTION produced by PRIMIX Corporation equipped with an impeller of Neo Mixer Model 4-2.5 produced by PRIMIX Corporation. Subsequently, 68.1 g of LarominC260 produced by BASF, which served as a curing agent, was added to the mixture, and the resulting mixture was further stirred. Thus, a comparative resin composition 2 was prepared.
A molded plate and a test piece were prepared as in Example 6. A bending test was conducted as in Example 6. No aggregation was observed in the molded plate prepared from the resin composition 6. The bending strength of the molded plate was 131.6 MPa.

(Comparative Example 3)

In Comparative Example 3, 9.4 g of the mixture 1 of a resin and cellulose nanofibers, which was prepared in Production Example 1, 150.0 g of an epoxy resin EPICLON850S produced by DIC Corporation, and 150.0 g of an epoxy resin EPICLON EXA-4850-150 produced by DIC Corporation were mixed together. The resulting mixture was stirred at 12000 revolutions for 30 minutes using a stirring apparatus LABOLUTION produced by PRIMIX Corporation equipped with an impeller of Neo Mixer Model 4-2.5 produced by PRIMIX Corporation. Subsequently, 68.1 g of LarominC260 produced by BASF, which served as a curing agent, was added to the mixture, and the resulting mixture was further stirred. Thus, a comparative resin composition 3 was prepared. The cellulose nanofiber content in the comparative resin

composition 3 was 1.0% by mass.

A molded plate and a test piece were prepared as in Example 4. A bending test was conducted as in Example 4. No aggregation was observed in the molded plate prepared from the comparative resin composition 3. The bending strength of the molded plate was 139.2 MPa.

(Comparative Example 4)

A comparative resin composition 4 was prepared as in Comparative Example 3 except that 9.4 g of the mixture 1 of a resin and cellulose nanofibers, which was prepared in Production Example 1, used in Comparative Example 3 was changed to 9.4 g of the mixture 2 of a resin and cellulose nanofibers, which was prepared in Production Example 2. The cellulose nanofiber content in the comparative resin composition 4 was 1.0% by mass.

A molded plate and a test piece were prepared as in Example 4. A bending test was conducted as in Example 4. No aggregation was observed in the molded plate prepared from the comparative resin composition 4. The bending strength of the molded plate was 136.4 MPa.

(Comparative Example 5)

In Comparative Example 5, 9.6 g of the mixture 1 of a resin and cellulose nanofibers, which was prepared in Production Example 1, 150.0 g of an epoxy resin EPICLON850S produced by DIC Corporation, 150.0 g of an epoxy resin EPICLON EXA-4850-150 produced by DIC Corporation, and 8.1 g of succinic anhydride (first-class reagent produced by KANTO CHEMICAL CO., INC.) were mixed together. The weight ratio of the mixture 1 of a resin and cellulose nanofibers to succinic anhydride which were used in Comparative Example 5 was the same as the weight ratio of the mixture 1 of a resin and cellulose nanofibers to succinic anhydride which were used as raw materials for preparing the composition 1 including modified cellulose nanofibers in Example 3. The resulting mixture was stirred at 12000 revolutions for 30 minutes using a stirring apparatus LABOLUTION produced by PRIMIX Corporation equipped with an impeller of Neo Mixer Model 4-2.5 produced by PRIMIX Corporation and subsequently heated at 110°C for 3 hours. After the temperature was reduced to room temperature, 68.1 g of LarominC260 produced by BASF, which served as a curing agent, was added to the mixture and the resulting mixture was further stirred. Thus, a comparative resin composition 5 was prepared. The cellulose nanofiber content in the comparative resin composition 5 was 1.0% by mass.

A molded plate and a test piece were prepared as in Example 4. A bending test was conducted as in Example 4. No aggregation was observed in the molded plate prepared from the comparative resin composition 5. The bending strength of the molded plate was 139.8 MPa.

(Comparative Example 6)

A comparative resin composition 6 was prepared as in Comparative Example 5 except that 9.6 g of the mixture 1 of a resin and cellulose nanofibers, which was prepared in Production Example 1, used in Comparative Example 5 was changed to 9.6 g of the mixture 2 of a resin and cellulose nanofibers, which was prepared in Production Example 2, and 8.1 g of succinic anhydride (first-class reagent produced by KANTO CHEMICAL CO., INC.) used in Comparative Example 5 was changed to 7.8 g of succinic anhydride (first-class reagent produced by KANTO CHEMICAL CO., INC.). The weight ratio of the mixture 2 of a resin and cellulose nanofibers to succinic anhydride which were used in Comparative Example 6 was the same as the weight ratio of the mixture 2 of a resin and cellulose nanofibers to succinic anhydride which were used as raw materials for preparing the composition 2 including modified cellulose nanofibers in Example 2. The cellulose nanofiber content in the comparative resin composition 6 was 1.0% by mass.

A molded plate and a test piece were prepared as in Example 4. A bending test was conducted as in Example 4. No aggregation was observed in the molded plate prepared from the comparative resin composition 6. The bending strength of the molded plate was 138.6 MPa.

(Comparative Example 7)

A comparative resin composition 6 was prepared as in Comparative Example 5 except that 8.1 g of succinic anhydride (first-class reagent produced by KANTO CHEMICAL CO., INC.) used in Comparative Example 5 was changed to 5.4 g of methyltetrahydrophthalic anhydride (EPICLON B-570H produced by DIC Corporation). The weight ratio of the mixture 1 of a resin and cellulose nanofibers to methyltetrahydrophthalic anhydride which were used in Comparative Example 7 was the same as the weight ratio of the mixture 1 of a resin and cellulose nanofibers to methyltetrahydrophthalic anhydride which were used as raw materials for preparing the masterbatch 3 including modified cellulose nanofibers in Example 1. The cellulose nanofiber content in the comparative resin composition 6 was 1.0% by mass.

A molded plate and a test piece were prepared as in Example 4. A bending test was conducted as in Example

4. No aggregation was observed in the molded plate prepared from the comparative resin composition 6. The bending strength of the molded plate was 139.9 MPa.

Tables 1 and 2 show the results of Examples 4 to 6 and Comparative Examples 1 to 7.

In Tables 1 and 2, CNF is an abbreviation of cellulose nanofibers.

In Tables 1 and 2, the masterbatches 1 to 3 refer to the masterbatches 1 to 3 including modified cellulose nanofibers prepared in Examples 1 to 3, respectively.

In Tables 1 and 2, the modified cellulose nanofibers refer to the modified cellulose nanofibers prepared in Comparative Example 1.

In Tables 1 and 2, the mixtures 1 and 2 refer to the mixtures 1 and 2 of a resin and cellulose nanofibers prepared in Production Examples 1 and 2, respectively.

In Tables 1 and 2, the reduced CNF weight% in molded product refers to, in Examples 4 to 6 and Comparative Example 1, the reduced cellulose nanofiber content which is described in Example 4 and, in Comparative Examples 2 to 7, the cellulose nanofiber content (weight%) in the molded product.

[Table 1]

| Table 1 | | Example 6 | Example 7 | Example 8 | Comparative Example 1 | Comparative Example 2 |
|---|---|---|---|---|---|---|
| Composition | Masterbatch 1 | 17.7 | | | | |
| | Masterbatch 2 | | 17.4 | | | |
| | Masterbatch 3 | | | 15.0 | | |
| | Comparative modified Cellulose nanofibers | | | | 9.0 | |
| | Mixture 1 | | | | | |
| | Mixture 2 | | | | | |
| | EP850S | 150.0 | 150.0 | 150.0 | 150.0 | 150.0 |
| | EXA-4850-150 | 150.0 | 150.0 | 150.0 | 150.0 | 150.0 |
| | LarominC260 | 68.1 | 68.1 | 68.1 | 68.1 | 68.1 |
| | Succinic anhydride | | | | | |
| | B-570 H | | | | | |
| Reduced CNF weight % in molded product | | 1.0% | 1.0% | 1.0% | 1.0% | 0 |
| D.S. of modified CNF | | 0.30 | 0.28 | 0.24 | 0.85 | - |
| Aggregation in molded product | | No aggregation | No aggregation | No aggregation | Aggregation observed | No aggregation |
| Bending strength of molded product (MPa) | | 144.5 | 148.3 | 145.1 | 80.1 | 131.6 |

[Table 2]

| Table 2 | | Comparative Example 3 | Comparative Example 4 | Comparative Example 5 | Comparative Example 6 | Comparative Example 7 |
|---|---|---|---|---|---|---|
| Composition | Masterbatch 1 | | | | | |
| | Masterbatch 2 | | | | | |
| | Masterbatch 3 | | | | | |
| | Comparative modified Cellulose nanofibers | | | | | |
| | Mixture 1 | 9.4 | | 9.6 | | 9.6 |
| | Mixture 2 | | 9.4 | | 9.6 | |
| | EP850S | 150.0 | 150.0 | 150.0 | 150.0 | 150.0 |
| | EXA-4850-150 | 150.0 | 150.0 | 150.0 | 150.0 | 150.0 |
| | LarominC260 | 68.1 | 68.1 | 68.1 | 68.1 | 68.1 |
| | Succinic anhydride | | | 8.1 | 7.8 | |
| | B-570H | | | | | 5.4 |
| Reduced CNF weight % in molded product | | 1.0% | 1.0% | 1.0% | 1.0% | 1.0% |
| D.S. of modified CNF | | 0 | 0 | 0 | 0 | 0 |
| Aggregation in molded product | | No aggregation | No aggregation | No aggregation | No aggregation | No aggregation |
| Bending strength of molded product (MPa) | | 139.2 | 136.4 | 139.8 | 138.6 | 139.9 |

Industrial Applicability

According to the present invention, modified cellulose nanofibers may be produced by fibrillating cellulose in a fibrillation resin to produce cellulose nanofibers and subsequently reacting hydroxyl groups of the cellulose nanofibers with a cyclic polybasic acid anhydride (B) in the fibrillation resin. Furthermore, the modified cellulose nanofibers and the masterbatch may be suitably used as reinforcements for molding resins. The molding resin composition including the modified cellulose nanofibers and the molded body, which have high mechanical strength, may be used in the field where molded products formed of microfibrillated vegetable fibers (cellulose nanofibers) or molded products formed of a resin including microfibrillated vegetable fibers are used and also in the field where a higher mechanical strength (e.g., bending strength) is needed. The molding resin composition including the modified cellulose nanofibers and the molded body may be advantageously used as, for example, an interior material, an exterior material, or a structural material for transporting machines such as automobiles, trains, ships, and airplanes; a housing, a structural member, or an internal part for electric appliances such as personal computers, TVs, and telephones; a building material; stationery; a housing for office machines such as OA instruments; sporting and leisure goods; or a structural material.

## Claims

1. A method for producing modified cellulose nanofibers, the method comprising the steps of: fibrillating cellulose in a fibrillation resin to produce cellulose nanofibers; and reacting hydroxyl groups of the cellulose nanofibers with a cyclic polybasic acid anhydride (A) in the fibrillation resin to produce modified cellulose nanofibers.

2. The method for producing modified cellulose nanofibers according to Claim 1, wherein the cyclic polybasic acid anhydride (A) is represented by Structural Formula (1),

[Chem. 1]

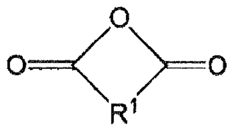

... (1)

(where, $R^1$ represents a straight-chain or branched-chain alkylene group having a carbon number of 15 or less, a straight-chain or branched-chain alkenylene group having a carbon number of 15 or less, or a substituent having a cyclic structure. Optionally, the cyclic acid anhydride may be bonded to another cyclic acid anhydride via the substituent to form a multimer).

3. Modified cellulose nanofibers produced by the method for producing modified cellulose nanofibers according to Claim 1 or 2.

4. A masterbatch comprising: a fibrillation resin or a fibrillation resin modified with a cyclic polybasic acid anhydride (A); and the modified cellulose nanofibers according to Claim 3.

5. A resin composition comprising: the masterbatch according to Claim 4; and a diluent resin.

6. A molded body formed of the resin composition according to Claim 5.

## Patentansprüche

1. Verfahren zur Herstellung modifizierter Cellulosenanofasern, wobei das Verfahren die folgenden Schritte umfasst: Fibrillieren von Cellulose in einem Fibrillierungsharz, um Cellulosenanofasern herzustellen, und Umsetzen von Hydroxylgruppen der Cellulosenanofasern mit einem cyclischen mehrbasigen Säureanhydrid (A) in dem Fibrillierungsharz, um modifizierte Cellulosenanofasern herzustellen.

2. Verfahren zur Herstellung modifizierter Cellulosenanofasern gemäß Anspruch 1, wobei das cyclische mehrbasige

Säureanhydrid (A) durch Strukturformel (1) dargestellt wird

[Chem. 1]

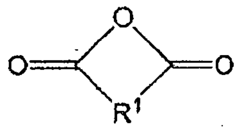

... (1)

(worin $R^1$ eine geradkettige oder verzweigtkettige Alkylengruppe mit einer Kohlenstoffzahl von 15 oder weniger, eine geradkettige oder verzweigtkettige Alkenylengruppe mit einer Kohlenstoffzahl von 15 oder weniger oder einen Substituenten mit einer cyclischen Struktur darstellt; wobei das cyclische Säureanhydrid gegebenenfalls über den Substituenten an ein anderes cyclisches Säureanhydrid gebunden sein kann, um ein Multimer zu bilden).

3. Modifizierte Cellulosenanofasern, die durch das Verfahren zur Herstellung von modifizierten Cellulosenanofasern gemäß Anspruch 1 oder 2 hergestellt wurden.

4. Masterbatch, umfassend: ein Fibrillierungsharz oder ein Fibrillierungsharz, das mit einem cyclischen mehrbasigen Säureanhydrid (A) modifiziert ist, und die modifizierten Cellulosenanofasern gemäß Anspruch 3.

5. Harzzusammensetzung, umfassend: das Masterbatch gemäß Anspruch 4 und ein Verdünnungsharz.

6. Formkörper, gebildet aus der Harzzusammensetzung gemäß Anspruch 5.

**Revendications**

1. Procédé de production de nanofibres de cellulose modifiée, le procédé comprenant les étapes suivantes : la fibrillation de la cellulose dans une résine de fibrillation pour produire des nanofibres de cellulose ; et la réaction des groupes hydroxyle des nanofibres de cellulose avec un anhydride d'acide polybasique cyclique (A) dans la résine de fibrillation pour produire les nanofibres de cellulose modifiée.

2. Procédé de production de nanofibres de cellulose modifiée selon la revendication 1, dans lequel l'anhydride d'acide polybasique cyclique (A) est représenté par la formule structurelle (1),

[Chem. 1]

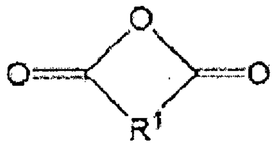

... (1)

(où $R^1$ représente un groupe alkylène à chaîne linéaire ou à chaîne ramifiée contenant un nombre de carbone inférieur ou égal à 15, un groupe alcénylène à chaîne linéaire ou à chaîne ramifiée contenant un nombre de carbone inférieur ou égal à 15 ou un substituant possédant une structure cyclique. Facultativement, l'anhydride d'acide cyclique peut être lié à un autre anhydride d'acide cyclique par l'intermédiaire du substituant pour former un multimère).

3. Nanofibres de cellulose modifiée produites par le procédé de production de nanofibres de cellulose modifiée selon la revendication 1 ou 2.

4. Mélange maître comprenant : une résine de fibrillation ou une résine de fibrillation modifiée avec un anhydride d'acide polybasique cyclique (A) ; et les nanofibres de cellulose modifiée selon la revendication 3.

**5.** Composition de résine comprenant : le mélange maître selon la revendication 4 ; et une résine de dilution.

**6.** Corps moulé formé de la composition de résine selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005042283 A
- JP 2009261993 A
- JP 2009293167 A
- JP 2011105799 A
- JP 2005239928 A